# EUROPÄISCHE PATENTSCHRIFT

(11) **EP 1 745 842 B1**
(45) Veröffentlichungstag und Bekanntmachung des Hinweises auf die Patenterteilung: **13.02.2008**
(21) Anmeldenummer: 06015316.0
(22) Anmeldetag: 24.07.2006
(51) Int. Cl.: B01J 2/10

(54) **Einrichtung zur Herstellung eines schüttfähigen Produktes**
Apparatus for the production of a pourable product
Appareil pour la production d'un produit apte à l'écoulement

(30) Priorität: 23.07.2005 DE 102005034457
(43) Veröffentlichungstag der Anmeldung: 24.01.2007
(73) Patentinhaber: Glatt Systemtechnik GmbH, 01277 Dresden (DE)
(72) Erfinder: Pritzke, Heinz, 01737 Kesselsdorf OT Braunsdorf (DE)
(74) Vertreter: Pätzelt, Peter

(56) Entgegenhaltungen:
- WO-A-20/04071647
- DE-A1- 19 750 042
- DE-A1- 19 838 540

## Beschreibung

Die Erfindung betrifft eine Einrichtung zur Herstellung eines schüttfähigen Produktes nach dem Oberbegriff des Anspruchs 1. Dabei werden unter schüttfähigem Produkt alle Produkte verstanden, die sich durch Rotation radial-tangential umwälzen lassen. Derartige Produkte werden insbesondere in der chemischen und pharmazeutischen Industrie und Nahrungsmittelindustrie hergestellt. Vielfach wird auf Kerne mindestens eine Hüllschicht aufgebracht.

Die Einrichtung umfasst mindestens eine Rotorkammer, in der ein Rotor mit vertikaler Rotorachse angeordnet ist, sowie Leitschaufeln, die statisch oberhalb des Rotors an der Rotorkammer vorgesehen sind, derart dass das umwälzende Produkt unter dem Einfluss der kinetischen Energie an der inneren Oberfläche des Rotors radial-tangential nach außen und auf den Leitschaufeln nach innen abrollen und in den Rotor zurückfallen.

Nach dem Stand der Technik ist eine Vielzahl von Einrichtungen bekannt, mit denen schüttfähige Produkte hergestellt werden können. Beispielhaft wird in der DE 197 50 042 C2 eine entsprechende Einrichtung beschrieben, wobei der Antrieb der Einrichtung in der Rotorachse unterhalb des Rotors vorgesehen ist. Derartige Einrichtungen erfordern eine erhebliche Bauhöhe, die vielfach nicht wünschenswert ist. Das Entleeren der Einrichtung erfolgt über eine verschließbare Öffnung in einer oder mehreren Leitschaufeln und in der Nähe der Wandung der Rotorkammer. Bei geöffneter Stellung und bei drehendem Rotor werden die Produkte über auftretende Fliehkräfte durch die Öffnung aus der Rotorkammer hinausbewegt. Als Variante wird zur Entleerung ein Saugrohr angegeben, welches von oben in den Innenraum des Rotors eingebracht und mit dem das fertige Produkt aus der Rotorkammer abgesaugt werden kann. Bei beiden Einrichtungen zur Entleerung kann es zur Beschädigung der empfindlichen Produkte kommen.

Das Dokument DE 197 50 042 A1 offenbart eine Einrichtung zur Herstellung eines schüttfähigen Produktes, bestehend aus einer Rotorkammer, in der ein Rotor mit vertikaler Rotorachse angeordnet ist, sowie Leitschaufeln, die derart statisch oberhalb des Rotors an der Rotorkammer vorgesehen sind, dass das umwälzende Produkt, unter dem Einfluss der kinetischen Energie an der inneren Oberfläche des Rotors radial-tangential nach aussen und auf den Leitschaufeln nach innen abrollen und in den Rotor zurückfallen.

Der Erfindung liegt die Aufgabe zugrunde, eine Einrichtung zur Herstellung eines schüttfähigen Produktes nach dem Oberbegriff des Anspruchs 1 anzugeben, die eine geringe Bauhöhe aufweist. Weiterhin soll die Einrichtung eine schonende Austragung des schüttfähigen Produktes aus der Einrichtung ermöglichen.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Die erfindungsgemäße Einrichtung besteht aus einer Rotorkammer, die an ihrer inneren Wandung und senkrecht zur Rotorachse einen Tragbund aufweist, auf dem mindestens ein Drehlager zur vertikalen Kraftaufnahme angeordnet ist. Am Rotor ist ein Lagerbund vorgesehen, mit dem der Rotor auf dem Drehlager aufliegt. Außerhalb der Rotorachse ist eine am Umfang des Rotors angreifende Antriebsvorrichtung vorhanden, die über eine Kupplungseinrichtung mit einem Antriebselement am Rotor gekuppelt ist. Weiterhin ist am Boden des Rotors eine Entleerungseinrichtung angeordnet, derart dass in geöffneter Stellung das schüttfähige Produkt nach unten aus dem Rotor fällt.

Die Lagerung des Rotors innerhalb der Rotorkammer erfolgt danach über den Lagerbund, mit dem der Rotor auf dem Drehlager aufliegt.

Als Drehlager können alle Lager eingesetzt werden, die geeignet sind, insbesondere vertikale Kräfte aufzunehmen. Dazu gehören Wälzlager mit vertikaler Rotationsachse oder mindestens drei Axialwälzlager mit horizontaler Rotationsachse sowie Fluidlager, z.B. Gaslager. Reiblagerungen sind meist weniger geeignet. Zur Aufnahme möglicher Radialkräfte sind, soweit erforderlich, entsprechende Lager auszuwählen oder andere bekannte technische Mittel einzusetzen.

Die Kupplungseinrichtung kann als Kegelrad-, Reibrad- oder Riemengetriebe oder Kombinationen davon ausgebildet sein.

Die Entleerungseinrichtung zum Entleeren des Rotors kann in beliebiger Weise ausgeführt sein, soweit durch deren Masseverteilung keine unerwünschte Unwucht auf den Rotor einwirkt. Z.B. kann die Entleerungseinrichtung ein zentrischer Teil im Boden des Rotors sein. Der Boden ist in der Rotorachse gegenüber den übrigen Elementen des Rotors absenkbar, derart dass in der Öffnungsstellung ein ringförmiger Spalt ausgebildet wird. In dieser Stellung wird unter der Wirkung der Schwerkraft das Produkt schonend ausgetragen.

Die Entleerungseinrichtung kann auch als eine oder mehrere Klappen oder Schieber umfassende Verschlusseinrichtung ausgebildet sein. Dabei sollte die Öffnung im tiefsten Bereich des Rotors liegen, damit ein schonender Austrag des Produktes gewährleistet ist.

Der vorteil der erfindungsgemäßen Lösung besteht insbesondere darin, dass innerhalb der Rotorachse kein Drehantrieb erforderlich ist. Dadurch kann die Bauhöhe geringer gehalten werden.

Nachstehend wird die Erfindung an zwei Ausführungsbeispielen näher erläutert.

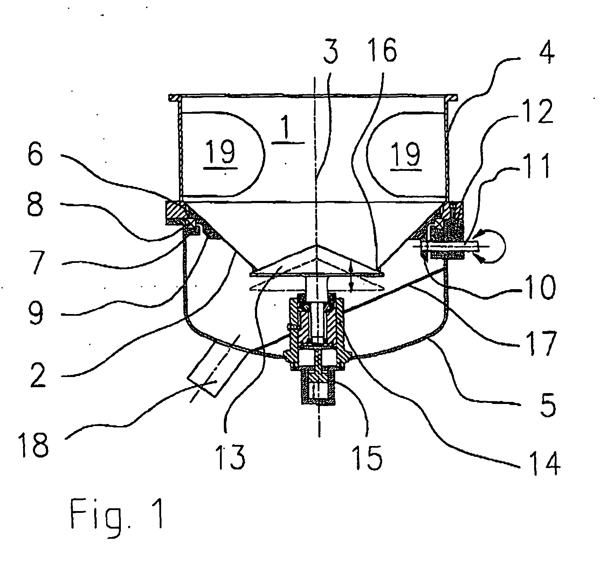

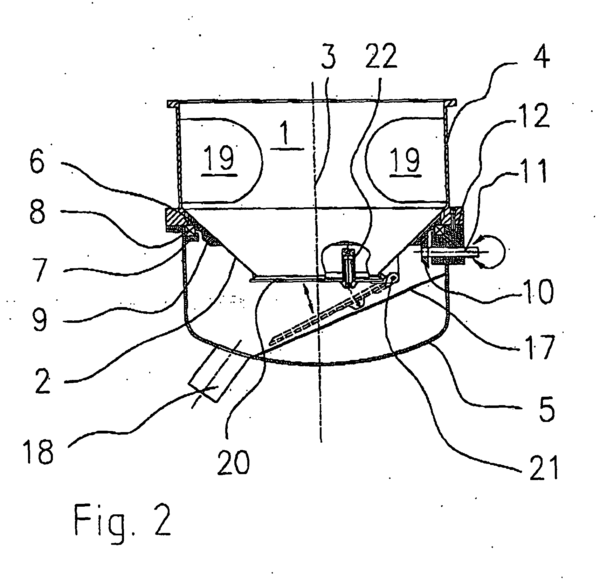

zugehörig zum Ausführungsbeispiel I zeigt Figur 1 einen schematischen Schnitt durch eine erfindungsgemäße Einrichtung mit einer axial zu betätigender Entleerungseinrichtung. Zugehörig zum Ausführungsbeispiel II zeigt Figur 2 einen Schnitt durch eine Einrichtung mit einer klappenartigen Entleerungseinrichtung im Boden des Rotors.

### Ausführungsbeispiel I

Im Ausführungsbeispiel I ist eine erfindungsgemäße Einrichtung zur Herstellung eines schüttfähigen Produktes dargestellt. Im wesentlichen besteht die Einrichtung aus einer Rotorkammer 1, einem Rotor 2 mit einer vertikalen Rotorachse 3 sowie statisch oberhalb des Rotors 2 an der Rotorkammer 1 angeordneten Leitschaufeln 19. Dabei besteht die Rotorkammer 1 aus einem oberen zylindrischen Stator 4 und einem unteren Gehäuse 5, die miteinander axial verbunden sind. Der Rotor 2 ist als Kegelrotor mit einem Rotorboden 13 ausgebildet.

Zur Lagerung des Rotors 2 innerhalb der Rotorkammer 1 weist dieser im oberen Bereich einen Lagerbund 6 auf. Zugeordnet ist am Gehäuse 5 ein Tragbund 7 vorgesehen. Zwischen dem Tragbund 7 und dem Lagerbund 6 befindet sich axial zur Rotorachse 3 als Drehlager ein axial und radial belastbares Wälzlager 8.

Im Beispiel ist der Lagerbund 6 mit einem Zahnkranz 9 kombiniert, der als Antriebselement zur Übertragung der Antriebskräfte für die Rotation des Rotors 2 wirkt. Zugeordnet zum Zahnkranz 9 ist ein Kegelrad 10, welches auf einer Welle 11 angeordnet ist, die über ein Antriebslager 12 das Gehäuse 5 durchdringt und mit einer nicht dargestellten äußeren Antriebsvorrichtung verbunden ist.

Der Rotorboden 13 ist mit dem Rotor 2 über einen lösbaren Reibverschluss verbunden. D.h. der Rotorboden 13 ist unabhängig vom Rotor 2 dreh- und vertikal verschiebbar in einer Bodenlagerung 14 gelagert. Die Bodenlagerung 14 umfasst in der Rotorachse 3 einen Pneumatikzylinder 15, der die vertikale Lage des Rotorbodens 13 bestimmt. Während der Rotation des Rotors 2 zum Zwecke der Herstellung eines bestimmten Produktes wird der Rotorboden 13 vom Pneumatikzylinder 15 gegen die untere Kante 16 des Rotors 2 gedrückt und über die auftretenden Reibkräfte mit dem Rotor 2 in Drehung versetzt. Der Rotorboden 13 ist im Beispiel als Kegel ausgebildet, damit sich die tiefste Stelle innerhalb des Rotors 2 an der unteren Kante 16 befindet.

Im Gehäuse 5 befindet sich weiterhin ein schräg angeordnetes Auslaufblech 17, welches an seiner tiefsten Stelle in einen rohrförmigen Produktauslauf 18 mündet.

Nachfolgend soll die Einrichtung in Funktion näher beschrieben werden. Vor Beginn des Prozesses wird sichergestellt, dass der Rotorboden 13 am Rotor 2 anliegt. Der Rotor 2 wird von der äußeren Antriebsvorrichtung über die Welle 11 und die Zahnradpaarung, Kegelrad 10 und Zahnkranz 9, in Drehung versetzt. Parallel wird in bekannter Weise in das Gehäuse 5 ein Gas eingelassen, welches durch den zwangsläufig vorhandenen Spalt zwischen dem Rotor 2 und dem Stator 4 in den Raum des Stators 4 strömt. Damit wird verhindert, dass später Produktteilchen nach unten in das Gehäuse 5 fallen können.

In bekannter Weise werden zur Herstellung eines schüttfähigen Produktes von oben Kerne sowie Materialien zur Beschichtung der Kerne in den Rotor 2 eingelassen und einem spezifischen Beschichtungsverfahren unterworfen.

Nach Abschluss des Beschichtungsverfahrens wird das schüttfähige Produkt aus der Einrichtung entfernt. Dazu wird die Drehung des Rotors 2 beendet oder stark verringert und der Rotorboden 13 vom Pneumatikzylinder 15 gegenüber der Kante 16 am Rotor 2 abgesenkt. Die abgesenkte Position des Rotorbodens 13 ist in Figur 1 durch eine gestrichelte Linie angedeutet. Dadurch entsteht an der tiefsten Stelle des Rotors 2 zwischen der Kante 16 und dem abgesenkten Rotorboden 13 ein Ringspalt, durch den das Produkt nach unten auf das Auslaufblech 17 und in den Produktauslauf 18 fließt.

### Ausführungsbeispiel II

Die Einrichtung nach dem Ausführungsbeispiel II und der zugehörigen Figur 2 ist betreffend der Lagerung und des Antriebes des Rotors 2 entsprechend Ausführungsbeispiel I ausgeführt. Insoweit sind auch die Positionsziffern identisch.

Der Rotor 2 weist jedoch einen Rotorboden 20 auf, der als Klappe ausgebildet ist. Der Rotorboden 20 ist in einem Drehpunkt 21 am Rotor 2 gelagert. Seitlich des Rotorbodens 20 und symmetrisch zum Drehpunkt 21 sind am Rotor 2 zwei Pneumatikzylinder 22 vorgesehen, deren Kolbenstangen am Rotorboden 20 angreifen und diesen um den Drehpunkt 21 bewegen können. In Figur 2 ist durch eine gestrichelte Linie die Lage des Rotorbodens 20 in der abgesenkten Position angedeutet.

Nach Abschluss des Beschichtungsverfahrens wird ähnlich wie beim Ausführungsbeispiel I das schüttfähige Produkt aus der Einrichtung entfernt. Dazu wird die Drehung des Rotors 2 beendet und der Rotor 2 in eine Position gebracht, in der sich der geöffnete Rotorboden 20 im Wesentlichen parallel zum Auslaufblech 17 befindet. Nach dem Öffnen des Rotorbodens 20 fließt das Produkt über das Auslaufblech 17 in den Produktauslauf 18.

## Patentansprüche

1. Einrichtung zur Herstellung eines schüttfähigen Produktes, bestehend aus einer Rotorkammer (1), in der ein Rotor (2) mit vertikaler Rotorachse (3) angeordnet ist, sowie Leitschaufeln (19), die derart statisch oberhalb des Rotors (2) an der Rotorkammer (1) vorgesehen sind, dass das umwälzende Produkt, unter dem Einfluss der kinetischen Energie an der inneren Oberfläche des Rotors (2) radial-tangential nach außen und auf den Leitschaufeln (19) nach innen abrollen und in den Rotor (2) zurückfallen,
**dadurch gekennzeichnet, dass**
- an der inneren Wandung der Rotorkammer (1) und senkrecht zur Rotorachse (3) ein Tragbund (7) vorgesehen ist,
- auf dem sich mindestens ein Drehlager zur vertikalen Kraftaufnahme befindet,
- dass der Rotor (2) einen Lagerbund (6) aufweist, mit dem der Rotor (2) auf dem Drehlager aufliegt,
- dass außerhalb der Rotorachse (3) eine Antriebsvorrichtung vorhanden ist,
- die über eine Kupplungseinrichtung mit einem Antriebselement am Rotor (2) gekuppelt ist und
- dass der Boden des Rotors (2) eine Entleerungseinrichtung aufweist, derart dass in geöffneter Stellung das schüttfähige Produkt nach unten aus dem Rotor (2) fällt.

2. Einrichtung nach Anspruch 1, **dadurch gekennzeichnet, dass** das Drehlager ein vertikal oder ein vertikal und radial belastbares Wälzlager (8) mit vertikaler Rotationsachse oder eine Kombination aus mindestens drei in entsprechender weise belastbaren Axialwälzlagern mit horizontaler Rotationsachse oder ein Fluidlager ist.

3. Einrichtung nach Anspruch 1 oder 2, **dadurch gekennzeichnet, dass** die Kupplungseinrichtung ein Kegelradgetriebe (9, 10) oder ein Reibradgetriebe oder ein Riemengetriebe ist.

4. Einrichtung nach einem der Ansprüche 1 bis 3, **dadurch gekennzeichnet, dass** die Entleerungseinrichtung ein zentrischer Teil im Boden des Rotors (2) ist, der in der Rotorachse (3) gegenüber den weiteren Elementen des Rotors (2) absenkbar ist.

5. Einrichtung nach Anspruch 4, **dadurch gekennzeichnet, dass** die Entleerungseinrichtung mindestens eine klappen- oder schieberartige Verschlusseinrichtung im unteren Bereich des Rotors ist.

## Claims

1. Device for producing a pourable product, consisting of a rotor chamber (1), in which a rotor (2) with a vertical rotor axis (3) is arranged, and of guide blades (19) which are provided statically above the rotor (2) on the rotor chamber (1) in such a way that the circulating product, under the influence of the kinetic energy, rolls radially and tangentially outwards on the inner surface of the rotor (2) and inwards on the guide blades (19) and falls back into the rotor (2),
**characterized in that**
- a carrying collar (7) is provided on the inner wall of the rotor chamber (1) and perpendicularly to the rotor axis (3),
- on which carrying collar at least one rotary bearing for vertical force absorption is located,
- the rotor (2) has a bearing collar (6), with which the rotor (2) lies on the rotary bearing,
- a drive device is present outside the rotor axis (3),
- which drive device is coupled to a drive element on the rotor (2) via a coupling device, and
- the bottom of the rotor (2) has an emptying device, such that, in the open position, the pourable product falls downwards out of the rotor (2).

2. Device according to Claim 1, **characterized in that** the rotary bearing is a vertically or vertically and radially loadable rolling bearing (8) with a vertical axis of rotation or is a combination of at least three correspondingly loadable axial rolling bearings with a horizontal axis of rotation or is a fluid bearing.

3. Device according to Claim 1 or 2, **characterized in that** the coupling device is a bevel-wheel gear (9, 10) or a friction-wheel gear or a belt mechanism.

4. Device according to one of Claims 1 to 3, **characterized in that** the emptying device is a centric part in the bottom of the rotor (2), which centric part can be lowered in the rotor axis (3) with respect to the further elements of the rotor (2).

5. Device according to Claim 4, **characterized in that** the emptying device is at least one flap-like or slide-like closing device in the lower region of the rotor.

## Revendications

1. Dispositif pour la production d'un produit apte à l'écoulement, composé d'une chambre de rotor (1) dans laquelle est disposé un rotor (2) ayant un axe de rotor vertical (3), et d'aubes directrices (19) qui sont prévues en position statique sur la chambre de rotor (1) au-dessus du rotor (2), de telle manière que le produit en recirculation roule sous l'influence de l'énergie cinétique en direction radiale-tangentielle vers l'extérieur sur la surface intérieure du rotor (2) et vers l'intérieur sur les aubes directrices (19) et retombe dans le rotor (2), **caractérisé en ce que**
- il est prévu un bourrelet de support (7) sur la paroi intérieure de la chambre de rotor (1) et perpendiculairement à l'axe de rotor (3),
- sur lequel il se trouve au moins un palier de rotation pour la reprise des forces verticales,
- le rotor (2) présente un bourrelet d'appui (6), avec lequel le rotor (2) repose sur le palier de rotation,
- un dispositif d'entraînement est présent à l'extérieur de l'axe de rotor (3),
- qui est couplé au moyen d'un dispositif de couplage à un élément d'entraînement sur le rotor (2), et
- le fond du rotor (2) comporte un dispositif de vidange, de telle manière que le produit apte à l'écoulement tombe vers le bas hors du rotor (2) lorsque ce dispositif est en position ouverte.

2. Dispositif selon la revendication 1, **caractérisé en ce que** le palier de rotation est un palier à roulement (8) pouvant être chargé verticalement ou verticalement et radialement, avec un axe de rotation vertical, ou une combinaison d'au moins trois paliers à roulement axiaux pouvant être chargés de manière correspondante, avec un axe de rotation horizontal, ou un palier à fluide.

3. Dispositif selon la revendication 1 ou 2, **caractérisé en ce que** le dispositif de couplage est une transmission à pignons coniques (9, 10) ou une transmission à roues frottantes ou une transmission à courroie.

4. Dispositif selon l'une quelconque des revendications 1 à 3, **caractérisé en ce que** le dispositif de vidange est une partie centrale dans le fond du rotor (2), qui peut être abaissée suivant l'axe de rotor (3) par rapport aux autres éléments du rotor (2).

5. Dispositif selon la revendication 4, **caractérisé en ce que** le dispositif de vidange est au moins un dispositif de fermeture à clapet ou à tiroir dans la région inférieure du rotor.
